# EUROPÄISCHE PATENTSCHRIFT

(11) **EP 1 866 195 B1**
(45) Veröffentlichungstag und Bekanntmachung des Hinweises auf die Patenterteilung: **01.10.2008**
(21) Anmeldenummer: 05794748.3
(22) Anmeldetag: 19.10.2005
(51) Int. Cl.: B62D 3/04, F16H 57/02

(54) **LENKUNG FÜR EIN KRAFTFAHRZEUG MIT EINEM IN EINE SCHNECKE EINGREIFENDEN SCHNECKENRAD**
STEERING MECHANISM FOR A MOTOR VEHICLE WITH A WORM GEAR WHICH IS ENGAGED INSIDE A WORM
DIRECTION DESTINEE A UN VEHICULE AUTOMOBILE ET COMPRENANT UNE ROUE DE VIS SANS FIN S'ENGRENANT DANS UNE VIS SANS FIN

(30) Priorität: 11.11.2004 DE 102004054510
(43) Veröffentlichungstag der Anmeldung: 19.12.2007
(73) Patentinhaber: ZF-Lenksysteme GmbH, 73527 Schwäbisch Gmünd (DE)
(72) Erfinder: SCHÄNZEL, Rainer, 73457 Essingen (DE); SCHUST, Achim, 73525 Schwäbisch Gmünd (DE); HUBER, Oliver, 70794 Filderstadt (DE); BÖTTCHER, Norbert, 73571 Göggingen (DE)
(86) Internationale Anmeldenummer: PCT/EP2005/055362
(87) Internationale Veröffentlichungsnummer: WO 2006/051034

(56) Entgegenhaltungen:
- EP-A- 1 106 474
- DE-A1- 10 051 306
- DE-A1- 10 122 434
- PATENT ABSTRACTS OF JAPAN Bd. 2000, Nr. 25, 12. April 2001 (2001-04-12) -& JP 2001 233225 A (KOYO SEIKO CO LTD), 28. August 2001 (2001-08-28)
- PATENT ABSTRACTS OF JAPAN Bd. 2000, Nr. 21, 3. August 2001 (2001-08-03) -& JP 2001 108025 A (KOYO SEIKO CO LTD), 20. April 2001 (2001-04-20)

## Beschreibung

Die Erfindung betrifft eine Lenkung für ein Kraftfahrzeug mit den Mermalen des Oberbegriffs des Anspruchs 1.

Das Loslager muss in Richtung des Schneckenrads verstellbar sein, damit über einen geeigneten hydraulischen oder mechanischen Dämpfer-/Federmechanismus ein Verschleiß an der Schnecke oder an dem Schneckenrad ausgeglichen werden kann. In Querrichtung der Schnecke existiert in der Regel ein Spiel zwischen dem Loslager und einer Lagerbuchse. Dieses Spiel ist erforderlich, um beim Ausgleich des Verschleißes der Schnecke oder des Schneckenrads das Loslager möglichst reibungsarm verstellen zu können. Da die Schnecke im Betrieb sehr schnell hin- und herbewegt wird, schlägt jedoch das Loslager auf Grund des vorhandenen Spiels gegen die Lagerbuchse, wodurch störende Geräusche erzeugt werden.

Einige Lösungen sehen eine spielfreie Lagerung vor. Bei Kälte kann das Loslager dann jedoch in der Buchse klemmen, wodurch das Loslager zum Ausgleich des Verschleißes nicht mehr verstellt werden kann.

Andere Lösungen sehen eine Lagerbuchse aus einem geräuschdämpfenden Kunststoff vor. Diese geräuschdämpfenden Kunststoffe können jedoch aufgrund der durch die Einbausituation vorgegebenen, geringen Wandstärken nicht die Einleitung von Körperschall in ein aus Aluminiumdruckguss gefertigtes Getriebegehäuse verhindern.

Eine weitere Lösung sieht eine Gummischicht zwischen dem Loslager und der Lagerbuchse vor. Problematisch hierbei ist jedoch die Dicke der Gummischicht, die bei zu geringer Dicke eine Geräuschdämpfung nicht verhindern kann, oder bei zu großer Dicke eine zu große Beweglichkeit der Schnecke in ihrer Querrichtung ermöglicht.

Eine Entkopplung der Schnecke vom Gehäuse scheint bei den gegenwärtigen Kräften nicht möglich zu sein.

Wenn die Lagerbuchse und das Lager ohne Spiel ausgeführt sind und die Lagerbuchse mittels Gummielementen vom Gehäuse abgekoppelt wird, kann das Loslager zum Ausgleich des Verschleißes nicht verstellt werden, woraus ein Zahnflankenklappern resultiert. Außerdem ermüdet der Gummiwerkstoff.

Die Erfindung hat die Aufgabe, die störenden Geräusche zu reduzieren und gleichzeitig eine Verstellung des Loslagers zum Ausgleich des Verschleißes zu ermöglichen.

Eine elektrische Servo-Lenk-Vorrichtung mit einer Schnecke, welche durch ein Lager drehbar in einem Gehäuse gelagert ist und die sich in Abhängigkeit von der Drehung eines Lenkkraftunterstützungsmotors dreht, und mit einem Schneckenrad, welches mit der Schnecke kämmt und derart mit einem Lenkmechanismus verbunden ist, dass der Lenkvorgang durch die Drehung des Motors unterstützt wird, ist aus der DE 101 22 434 A1 bekannt. Bei dieser bekannten Lösung sind an dem Außenumfang des Lagers elastische Teile angeordnet, um eine Bewegung des Lagers in seiner Radialrichtung zu verhindern, und die Rückhaltekräfte der elastischen Teile in Abhängigkeit von der Position der elastischen Teile in deren Umfangsrichtung unterschiedlich variieren zu können.

Die Erfindung löst die gestellte Aufgabe durch eine Lenkung der eingangs genannten Art mit den Merkmalen des Anspruchs 1. Die das Loslager einspannende Feder reduziert oder vermeidet ein Anschlagen des Loslagers gegen die Lagerbuchse, sodass die bisher störenden Geräusche nicht mehr als störend empfunden oder ganz vermieden werden. Die Reibung zwischen dem Loslager und der Feder kann so gewählt werden, dass das Loslager zum Ausgleich des Verschleißes über den hydraulischen oder mechanischen Dämpfer-/Federmechanismus leicht verstellt werden kann.

Die Feder greift die Lagerbuchse um. Dadurch erhält die Feder auf der Lagerbuchse einen festen Sitz, sodass die Feder auch bei Erschütterungen zuverlässig auf der Lagerbuchse befestigt ist.

Um die Feder schnell auf die Lagerbuchse montieren zu können, kann die Feder auf die Lagerbuchse aufgeschnappt werden.

Die Lagerbuchse weist eine Öffnung für den Kontakt der Feder mit dem Loslager auf. Somit kann die Feder gegen das in der Lagerbuchse befindliche Loslager drücken.

Die Lagerbuchse kann aus Kunststoff gefertigt sein, um sie in großen Stückzahlen preiswert herstellen zu können. Es sind jedoch auch andere Werkstoffe mit geeigneten Eigenschaften möglich.

Vorteilhafterweise ist die Lagerbuchse ein Spritzgussteil, sodass die relativ komplizierte Form der Lagerbuchse preiswert hergestellt werden kann.

Gute Ergebnisse hinsichtlich der Geräuschereduzierung und der Verstellung des Loslagers zum Ausgleich des Verschleißes werden erzielt, wenn die Feder eine Blattfeder ist. Die Feder kann jedoch auch eine Druckfeder oder eine andere dem Fachmann bekannte Feder sein.

Schnell und preiswert lässt sich die Lagerbuchse in ein Getriebegehäuse montieren, wenn die Lagerbuchse in das Getriebegehäuse eingepresst wird. Außerdem drückt dann das Getriebegehäuse die Feder noch stärker gegen das Loslager, sodass die Wirkung der Feder erhöht wird.

Damit das Loslager mit einer besonders hohen Federkraft in der Lagerbuchse eingespannt werden kann, kann das Getriebegehäuse die Feder an mindestens zwei Anpressstellen gegen das Loslager drücken.

Wenn die Feder so positioniert ist, dass sie das Loslager zum Schneckenrad drückt, dann kann die Feder den hydraulischen oder mechanischen Dämpfer-/Federmechanismus zum Ausgleich des Verschleißes unterstützen oder ersetzen.

Nachfolgend wird die Erfindung anhand der beiliegenden Zeichnungen näher erläutert.

Im Einzelnen zeigen:
- Fig. 1: eine Draufsicht auf ein Schneckenrad, eine Schnecke, ein Festlager und ein Loslager;
- Fig. 2: eine Schnittansicht durch das Loslager aus Fig.1.

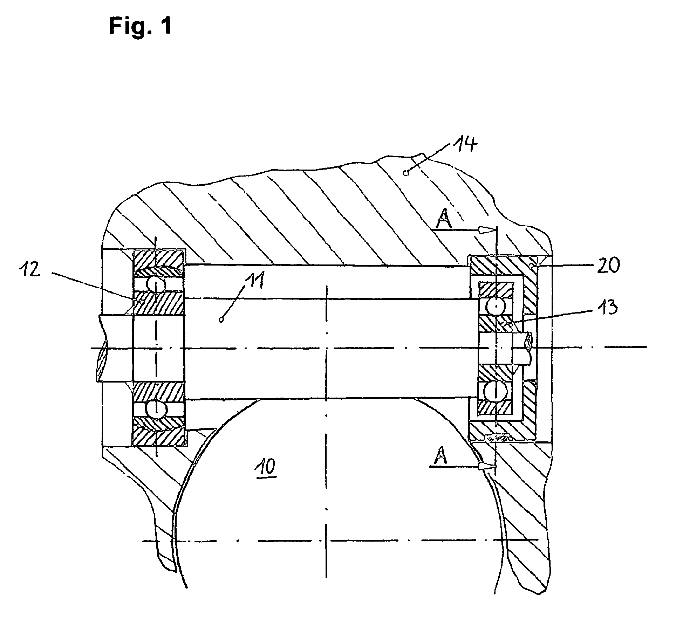

Fig. 1 zeigt ein Schneckenrad 10, das in eine Schnecke 11 eingreift. Die Schnecke 11 ist an ihrem einen Ende mit einem Festlager 12 und an ihrem anderen Ende mit einem Loslager 13 gelagert.

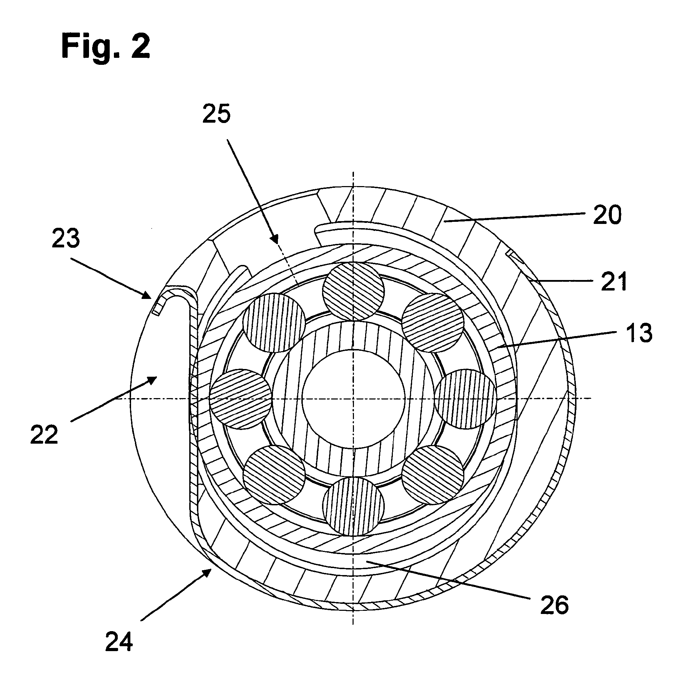

Das Loslager 13 ist in eine Lagerbuchse 20 eingebaut. Auf die Lagerbuchse 20 ist eine Feder 21 aufgeschnappt (siehe Fig. 2), sodass die Feder 21 die Lagerbuchse 20 umgreift. Auf diese Weise sitzt die Feder 21 fest auf der Lagerbuchse 20, wodurch die Feder 21 auch bei Erschütterungen zuverlässig auf der Lagerbuchse 20 gehalten wird.

Die Lagerbuchse 20 ist mit einer Öffnung 22 versehen, damit die Feder 21 gegen das Loslager 13 drücken kann. Durch den Druck der Feder 21 gegen das Loslager 13 wird eine Bewegung des Loslagers 13 in Querrichtung der Schnecke 11 reduziert oder ganz vermieden. Auf diese Weise können störende Geräusche, die entstehen, wenn das Loslager 13 im Betrieb aufgrund von sehr schnellen Hin- und Herbewegungen in Querrichtung der Schnecke 11 gegen die Lagerbuchse 20 schlägt, nicht mehr wahrgenommen werden.

Um diesen Effekt noch zu verstärken, drückt ein Getriebegehäuse 14 (siehe Fig. 1) an den durch Pfeile 23 und 24 dargestellten Anpressstellen gegen die Feder 21 (siehe Fig. 2). Somit wird das Loslager 13 mit einer besonders hohen Federkraft in der Lagerbuchse 20 eingespannt.

In weiteren hier nicht dargestellten Ausführungsvarianten kann das Getriebegehäuse 14 auch an anderen Stellen gegen die Feder 21 drücken. Außerdem ist es möglich, dass das Getriebegehäuse 14 an mehr als zwei Anpressstellen gegen die Feder 21 drückt.

Die Lagerbuchse 20 weist eine Öffnung 25 auf, durch die ein hier nicht gezeigter hydraulischer oder mechanischer Dämpfer-/Federmechanismus auf das Loslager 13 drücken kann, um das Loslager 13 innerhalb eines zwischen dem Loslager 13 und der Lagerbuchse 20 bestehenden Zwischenraums 26 nach unten verstellen zu können. Durch diese Verstellbewegung kann die Schnecke 11 gegen das Schneckenrad 10 bewegt werden, wodurch ein Verschleiß an der Schnecke 11 oder dem Schneckenrad 10 ausgeglichen wird. Deshalb kann die Reibung zwischen dem Loslager 13 und der Feder 21 so gewählt werden, dass die Verstellbewegung möglich ist.

Wenn auch die in Fig. 2 gezeigte Feder 21 so eingebaut ist, dass sie das Loslager 13 nicht zum unterhalb der Lagerbuchse 20 angeordneten Schneckenrad 10 drückt, so ist es doch möglich, die Feder 21 so zu positionieren, dass sie das Loslager 13 zum Schneckenrad 10 drückt. Auf diese Weise kann die Feder 21 den nicht gezeigten hydraulischen oder mechanischen Dämpfer-/Federmechanismus zum Ausgleich des Verschleißes der Schnecke 11 und des Schneckenrades 10 unterstützen oder sogar ersetzen.

Da die Lagerbuchse 20 ein relativ kompliziertes Bauteil ist, ist es sinnvoll, die Lagerbuchse 20 aus Kunststoff, insbesondere durch ein Spritzgussverfahren herzustellen.

Besonders gute Ergebnisse hinsichtlich der Geräuschreduzierung und der Verstellung des Loslagers 13 zum Ausgleich des Verschleißes der Schnecke 11 und des Schneckenrades 10 werden erzielt, wenn die Feder 21 eine Blattfeder ist.

Vorteilhafterweise ist die Lagerbuchse 20 in das Getriebegehäuse 14 eingepresst. Dadurch kann die Lagerbuchse 20 schnell und preiswert montiert werden. Außerdem drückt dann das Getriebegehäuse 14 mit einer maximalen Kraft gegen die Feder 21, wodurch die Feder 21 optimale Ergebnisse bewirkt.

### BEZUGSZEICHENLISTE

- 10: Schneckenrad
- 11: Schnecke
- 12: Festlager
- 13: Loslager
- 14: Getriebegehäuse

- 20: Lagerbuchse
- 21: Feder
- 22: Öffnung
- 23: Anpressstelle
- 24: Anpressstelle
- 25: Öffnung
- 26: Zwischenraum

## Patentansprüche

1. Lenkung für ein Kraftfahrzeug mit einem in eine Schnecke (11) eingreifenden Schneckenrad (10), wobei die Schnecke (11) an einem Ende ein Loslager (13) aufweist und das Loslager (13) in einer Lagerbuchse (20) von einer Feder (21) einspannbar ist, welche die Lagerbuchse (20) umgreift, **dadurch gekennzeichnet, dass** die Lagerbuchse (20) eine Öffnung (22) für den Kontakt der Feder (21) mit dem Loslager (13) hat.

2. Lenkung nach Anspruch 1, **dadurch gekennzeichnet, dass** die Feder (21) auf die Lagerbuchse(20) aufschnappbar ist.

3. Lenkung nach einem der Ansprüche 1 bis 2, **dadurch gekennzeichnet, dass** die Lagerbuchse (20) aus Kunststoff gefertigt ist.

4. Lenkung nach Anspruch 3, **dadurch gekennzeichnet, dass** die Lagerbuchse (20) ein Spritzgussteil ist.

5. Lenkung nach einem der Ansprüche 1 bis 4, **dadurch gekennzeichnet, dass** die Feder (21) eine Blattfeder ist.

6. Lenkung nach einem der Ansprüche 1 bis 5, **dadurch gekennzeichnet, dass** die Lagerbuchse (20) in ein Getriebegehäuse (14) einpressbar ist.

7. Lenkung nach Anspruch 6, **dadurch gekennzeichnet, dass** das Getriebegehäuse (14) die Feder (21) an mindestens zwei Anpressstellen (23, 24) gegen das Loslager (13) drückt.

8. Lenkung nach einem der Ansprüche 1 bis 7, **dadurch gekennzeichnet, dass** die Feder (21) so positioniert ist, dass sie das Loslager (13) zum Schneckenrad (10) drückt.

## Claims

1. Steering system for a motor vehicle having a worm gear (10) which engages into a worm (11), the worm (11) having a floating bearing (13) at one end and it being possible for the floating bearing (13) to be clamped in a bearing bush (20) by a spring (21) which engages around the bearing bush (20), **characterized in that** the bearing bush (20) has an opening (22) for the contact of the spring (21) with the floating bearing (13).

2. Steering system according to Claim 1, **characterized in that** the spring (21) can be snapped onto the bearing bush (20).

3. Steering system according to either of Claims 1 and 2, **characterized in that** the bearing bush (20) is produced from plastic.

4. Steering system according to Claim 3, **characterized in that** the bearing bush (20) is an injection-moulded part.

5. Steering system according to one of Claims 1 to 4, **characterized in that** the spring (21) is a leaf spring.

6. Steering system according to Claims 1 to 5, **characterized in that** the bearing bush (20) can be pressed into a transmission housing (14).

7. Steering system according to Claim 6, **characterized in that** the transmission housing (14) presses the spring (21) against the floating bearing (13) at at least two pressing locations (23, 24).

8. Steering system according to one of Claims 1 to 7, **characterized in that** the spring (21) is positioned in such a way that it presses the floating bearing (13) towards the worm gear (10).

## Revendications

1. Direction pour un véhicule automobile, comprenant une roue de vis sans fin (10) s'engrenant dans une vis sans fin (11), la vis sans fin (11) présentant à une extrémité un palier libre (13) et le palier libre (13) pouvant être serré dans une douille palier (20) par un ressort (21), qui s'engrène autour de la douille palier (20), **caractérisée en ce que** la douille palier (20) a une ouverture (22) pour le contact du ressort (21) avec le palier libre (13).

2. Direction selon la revendication 1, **caractérisée en ce que** le ressort (21) peut être encliqueté sur la douille palier (20).

3. Direction selon l'une quelconque des revendications 1 à 2, **caractérisée en ce que** la douille palier (20) est fabriquée en plastique.

4. Direction selon la revendication 3, **caractérisée en ce que** la douille palier (20) est une pièce moulée par injection.

5. Direction selon l'une quelconque des revendications 1 à 4, **caractérisée en ce que** le ressort (21) est un ressort à lame.

6. Direction selon l'une quelconque des revendications 1 à 5, **caractérisée en ce que** la douille palier (20) peut être enfoncée dans une boîte de transmission (14).

7. Direction selon la revendication 6, **caractérisée en ce que** la boîte de transmission (14) presse le ressort (21) au niveau d'au moins deux points de pression (23, 24) contre le palier libre (13).

8. Direction selon l'une quelconque des revendications 1 à 7, **caractérisée en ce que** le ressort (21) est positionné de telle sorte qu'il presse le palier libre (13) par rapport à la roue de vis sans fin (10).
